(19) Europäisches Patentamt
European Patent Office
Office européen des brevets

(11) EP 0 759 440 A2

(12) **EUROPÄISCHE PATENTANMELDUNG**

(43) Veröffentlichungstag:
26.02.1997 Patentblatt 1997/09

(51) Int. Cl.⁶: **C07F 9/09**, C09B 67/00,
C09D 17/00, B01F 17/00

(21) Anmeldenummer: 96112274.4

(22) Anmeldetag: 30.07.1996

(84) Benannte Vertragsstaaten:
**BE CH DE FR GB IT LI**

(30) Priorität: **09.08.1995 DE 19529242**

(71) Anmelder: **BASF AKTIENGESELLSCHAFT**
**67056 Ludwigshafen (DE)**

(72) Erfinder:
• **Zirnstein, Michael, Dr.**
**69198 Schriesheim (DE)**
• **Schröder, Jörg, Dr.**
**69469 Weinheim (DE)**
• **Kreuzer, Robert**
**67069 Ludwigshafen (DE)**

(54) **Phosphorsäureester**

(57) Phosphorsäureester, erhältlich durch

a) Umsetzung eines Mono-, Oligo- oder Polyamins mit einem Alkylenoxid oder Alkylencarbonat zu einem Aminoalkohol, Aminomono-, -oligo- oder -polyetheralkohol, wobei 50 bis 100 % der oxalkylierbaren NH-Gruppierungen des Amins oxalkyliert werden,

b) Umsetzung des gebildeten Amino(ether)alkohols mit einer Hydroxycarbonsäure oder einer Dicarbonsäure und einem Diol zu einem Mono-, Oligo- oder Polyester oder Umsetzung mit einem Diisocyanat und einem Diol zu einem Di-, Oligo- oder Polyurethan, wobei 50 bis 100 % der im Amino(ether)alkohol enthaltenen, endständigen Hydroxylgruppen verestert oder in Urethangruppen überführt werden, und

c) Umsetzung des gebildeten Amino(ether)esters oder -urethans mit einer phosphorsäureesterbildenden Phosphorverbindung, wobei 5 bis 100 % der im Amino(ether)ester oder -urethan enthaltenen, endständigen Hydroxylgruppen in Phosphorsäureestergruppen umgewandelt werden und die Phosphoratome ein- und/oder zweifach und gegebenenfalls dreifach verestert werden,

Herstellung der Phosphorsäureester und ihre Verwendung als Dispergiermittel für Feststoffe.

EP 0 759 440 A2

**Beschreibung**

Die vorliegende Erfindung betrifft Phosphorsäureester, welche durch

a) Umsetzung eines Mono-, Oligo- oder Polyamins mit einem Alkylenoxid oder Alkylencarbonat zu einem Aminoalkohol, Aminomono-, -oligo- oder -polyetheralkohol, wobei 50 bis 100 % der oxalkylierbaren NH-Gruppierungen des Amins oxalkyliert werden,

b) Umsetzung des gebildeten Amino(ether)alkohols mit einer Hydroxycarbonsäure oder einer Dicarbonsäure und einem Diol zu einem Mono-, Oligo- oder Polyester oder Umsetzung mit einem Diisocyanat und einem Diol zu einem Di-, Oligo- oder Polyurethan, wobei 50 bis 100 % der im Amino(ether)alkohol enthaltenen, endständigen Hydroxylgruppen verestert oder in Urethangruppen überführt werden, und

c) Umsetzung des gebildeten Amino(ether)esters oder -urethans mit einer phosphorsäureesterbildenden Phosphorverbindung, wobei 5 bis 100 % der im Amino(ether)ester oder -urethan enthaltenen, endständigen Hydroxylgruppen in Phosphorsäureestergruppen umgewandelt werden und die Phosphoratome ein- und/oder zweifach und gegebenenfalls dreifach verestert werden,

erhältlich sind.

Weiterhin betrifft die Erfindung die Herstellung der Phosphorsäureester und ihre Verwendung als Dispergiermittel für Feststoffe.

Um die Dispergierung von Feststoffen in flüssigen Medien zu erleichtern und zu verbessern, werden üblicherweise Dispergiermittel eingesetzt, die gleichzeitig auch stabilisierend auf die erhaltenen Dispersionen wirken sollen und eine Reagglomerierung oder Flockung der Feststoffteilchen verhindern sollen. Die Dispergiermittel fördern als oberflächenaktive Mittel die Benetzung der zu dispergierenden Feststoffteilchen und erleichtern das Aufbrechen von Agglomeraten.

Von besonderer Bedeutung sind sie beispielsweise für die Dispergierung von Pigmenten in Bindemitteln bei der Herstellung von Druckfarben, Anstrichfarben und Lacken und bei der Pigmentierung von Kunststoffmassen. Aus Gründen der Wirtschaftlichkeit ist man dabei bemüht, von möglichst konzentrierten Pigmentdispersionen, z.B. sog. Stammpasten bei der Lack- und Druckfarbenherstellung oder master-batches bei der Kunststoffpigmentierung, auszugehen, die nur mit Hilfe von Dispergiermitteln auf geeignete Viskositäten eingestellt werden können.

Die Verwendung von sauren Phosphorsäureestern unterschiedlicher Struktur als Dispergiermittel für Pigmente ist aus verschiedenen Druckschriften bekannt. So werden in der US-A-4 720 514 für diesen Zweck Phosphorsäureester auf der Basis von oxalkylierten Alkyl-(Nonyl-)phenolen beschrieben. In den EP-A-56 523 und 555 950 sowie der US-A-4 872 916 werden Phosphorsäureester auf der Basis von oxethylierten aromatischen Alkoholen und in der EP-A-256 427 Phosphorsäureester auf der Basis von oxethylierten Fettalkoholen als Pigmentdispergiermittel für wäßrige Systeme genannt. Weiterhin werden in der EP-A-256 454 pigmentdispergierende Phosphorsäureester auf der Basis von durch Polykondensation von Polycarbonsäuren und Polyalkoholen hergestellten, terminale Hydroxylgruppen aufweisenden Polyestern sowie in der EP-A-417 490 solche auf der Basis von ebenfalls hydroxyterminierten, oxalkylierten und veresterten Monoalkoholen (Alkylpolyethylenglykolpolyestern) beschrieben.

Die bekannten Dispergiermittel haben jedoch den Nachteil, daß sie meist nicht universell einsetzbar sind und in verschiedenen Bindemittelsystemen, z.B. in Wasserlacken und High-Solids-Lacken, keine ausreichende Dispergierwirkung zeigen und daher zu schlechter Lasur und Glanzverlusten bei den hergestellten Beschichtungen führen oder sogar mit den Bindemittelsystemen nicht verträglich sind. Außerdem erfordern diese sauren Phosphorsäureester in der Regel einen in der benötigten Menge unerwünschten aminbasischen Zusatz, um z.B. den optimalen pH-Wert eines Lacksystems einzustellen. Bereits (teil)neutralisierte Salze dieser Ester enthalten oft flüchtige Amine, die zu Geruchsbelästigungen führen.

Der Erfindung lag daher die Aufgabe zugrunde, Dispergiermittel mit vorteilhaften Anwendungseigenschaften bereitzustellen, die leicht an die jeweiligen Anwendungsmedien angepaßt werden können.

Demgemäß wurden die eingangs definierten Phosphorsäureester gefunden.

Außerdem wurde das hierdurch definierte Verfahren zur Herstellung dieser Phosphorsäureester gefunden.

Weiterhin wurde die Verwendung der Phosphorsäureester als Dispergiermittel für Feststoffe gefunden.

Wesentlich für die erfindungsgemäßen Phosphorsäureester ist, daß sie aufgrund der gleichzeitig enthaltenen basischen Aminogruppen und sauren Phosphorsäureresten zumindest teilneutralisiert in Form innerer Salze (Ammoniumkation/Phosphatanion) vorliegen und daher keinen oder nur geringen Aminzusatz bei der Anwendung in Bindemittelsystemen, insbesondere auch für Lacke, erfordern.

Die erfindungsgemäßen Phosphorsäureester können vorteilhaft nach dem erfindungsgemäßen Herstellungsverfahren erhalten werden, bei dem a) ein Amin mit einem Alkylenoxid oder Alkylencarbonat zu einem Aminoalkohol oder Aminoetheralkohol umgesetzt wird, b) der gebildete Aminoalkohol bzw. Aminoetheralkohol mit einer Hydroxycarbonsäure oder eine Dicarbonsäure und einem Diol verestert oder mit einem Diisocyanat und einem Diol in ein Urethan überführt wird und c) der gebildete Aminoester bzw. Aminoetherester oder das gebildete Aminourethan bzw. Aminoetherurethan in einen Phosphorsäureester überführt (phosphatiert) wird.

Als Aminkomponente kommen in Schritt a) neben Ammoniak besonders primäre und ganz besonders sekundäre Amine in Betracht (eine primäre Aminogruppe bedeutet dabei zwei oxalkylierbare NH-Funktionen). Bevorzugt sind dabei aliphatische und cycloaliphatische Amine, die ungesättigt sein können, bevorzugt aber gesättigt sind. Es eignen sich auch araliphatische und aromatische Amine, die einkernige oder mehrkernige Arylreste oder Biphenylreste enthalten können. Die in den Aminen enthaltenen Alkylreste können linear oder verzweigt sein, und die aliphatischen und aromatischen Ringe können durch Alkyl oder Alkoxy, die vorzugsweise 1 bis 30 Kohlenstoffatome enthalten, substituiert sein.

Es können sowohl Monoamine als auch Oligoamine (darunter sollen hier auch Di- und Triamine verstanden werden) und Polyamine wie Polyalkylenpolyamine und Polyvinylamine eingesetzt werden, bevorzugt sind jedoch solche Amine, die nur eine oxalkylierbare NH-Gruppierung enthalten, insbesondere sekundäre Monoamine mit verschiedenen oder vorzugsweise gleichen Alkyl- oder Cycloalkylresten.

Geeignete aliphatische und araliphatische Monoamine enthalten in der Regel 1 bis 30, bevorzugt 2 bis 24, Kohlenstoffatome. Aliphatische Oligoamine weisen im allgemeinen pro Alkylenrest 1 bis 20, insbesondere 2 bis 14, Kohlenstoffatome auf, wobei enthaltene sekundäre oder tertiäre Aminstickstoffatome durch Alkyl-, Aralkyl- und/oder Arylreste mit 1 bis 30, bevorzugt 3 bis 24, Kohlenstoffatomen substituiert sein können.

Die Amine können weiter funktionalisiert, z.B. alkoxyliert, sein (Etheramine, Polyetheramine, Polyetherpolyamine).

Man kann selbstverständlich auch direkt Aminoalkohole oder Aminoetheralkohole einsetzen, die, bezogen auf die Amino-, Ether- und Alkoholfunktionen, jeweils sowohl einwertig als auch mehrwertig sein können. Vorzugsweise werden die Aminoalkohole weiter zu Aminoetheralkoholen oxalkyliert; man kann sie aber auch direkt verestern oder in ein Urethan überführen.

Im folgenden seien als Beispiele für die einzelnen geeigneten Aminkomponenten genannt:

- aliphatische (auch cycloaliphatische und araliphatische) Monoamine:
Methylamin, Ethylamin, Propylamin, Isopropylamin, Cyclopropylamin, Butylamin, Isobutylamin, sek.-Butylamin, tert.-Butylamin, Pentylamin, 3-Methylbutylamin, Cyclopentylamin, Hexylamin, Cyclohexylamin, Octylamin, 1,5-Dimethylhexylamin, 2-Ethylhexylamin, 3-Aminomethylpinan, Decylamin, Dodecylamin, Isotridecylamin, Kokosfettamin, Palmfettamin, Hexadecylamin, Octadecylamin, Talgfettamin, hydriertes Talgfettamin, Oleylamin, Behenylamin, Isonorbornylamin, Benzylamin, 4-Methoxybenzylamin, 1- und 2-Phenylethylamin, 2- und 4-Methoxyphenylamin, 3,4-Dimethoxyphenylethylamin und 1-Methyl-3-phenylpropylamin;
Dimethylamin, N-Methylethylamin, Diethylamin, N-Methylpropylamin, N-Ethylpropylamin, N-Ethylisopropylamin, Dipropylamin, Diisopropylamin, N-Methylbutylamin, N-Ethylbutylamin, Dibutylamin, Diisobutylamin, N-Isobutyl-sek.-butylamin, Di-sek.-butylamin, Dipentylamin, Diisopentylamin, Pyrrolidin, N-Methyl-cyclohexylamin, N-Ethylcyclohexylamin, N-Isopropylcyclohexylamin, N-Butylcyclohexylamin, Dicyclohexylamin, Dihexylamin, Piperidin, N-Methyl-2-ethylhexylamin, N-Butyl-2-ethylhexylamin, Dioctylamin, Di-2-ethylhexylamin, Dikokosfettamin, Distearylamin, Dioleylamin, Ditalgfettamin, hydriertes Ditalgfettamin und N-Methylbenzylamin;

- aliphatische Oligoamine (auch Di- und Triamine):
1,2-Diaminoethan, N-Methyl-1,2-diaminoethan, N,N-Dimethyl-1,2-diaminoethan, N,N'-Dimethyl-1,2-diaminoethan, N,N,N'-Trimethyl-1,2-diaminoethan, N-Ethyl-1,2-diaminoethan, N,N-Diethyl-1,2-diaminoethan, N,N'-Diethyl-1,2-diaminoethan, N,N,N'-Triethyl-1,2-diaminoethan, N-Methyl-N-ethyl-1,2-diaminoethan, N-Methyl-N'-ethyl-1,2-diaminoethan, N,N-Dimethyl-N'-ethyl-1,2- diaminoethan, N,N'-Dimethyl-N-ethyl-1,2-diaminoethan, N-Propyl-1,2-diaminoethan, N,N-Dipropyl-1,2-diaminoethan, N,N'-Dipropyl-1,2-diaminoethan, N,N,N'-Tripropyl-1,2-diaminoethan, N-Butyl-1,2-diaminoethan, N,N-Dibutyl-1,2-diaminoethan, N,N'-Dibutyl-1,2-diaminoethan, N,N,N'-Tributyl-1,2-diaminoethan, 1,3-Diaminopropan, N-Methyl-1,3-diaminopropan, N,N'-Dimethyl-1,3-diaminopropan, N,N-Dimethyl-1,3-diaminopropan, N,N-Diethyl-1,3-diaminopropan, N-Ethyl-1,3-diaminopropan, N-Propyl-1,3-diaminopropan, N,N-Dipropyl-1,3-diaminopropan, N-Cyclohexyl-1,3-diaminopropan, 2-Ethylhexyl-1,3-diaminopropan, N-Lauryl-1,3-diaminopropan, N-Kokosfettalkyl-1,3-diaminopropan, N-Stearyl-1,3-diaminopropan, N-Oleyl-1,3-diaminopropan, N-Talgfettalkyl-1,3-diaminopropan, 4,4'-Diaminocyclohexylmethan, 1,2-Diaminopropan, N,N-Dimethyl-1,2-diaminopropan, 1,4-Diaminobutan, 1,2-Diaminobutan, 1,3-Diaminobutan, 1-Diethylamino-4-aminopentan, 1,5-Diaminopentan, Neopentandiamin, Dimethylneopentandiamin, 1,6-Diaminohexan, N,N-Diethyl-1,4-diaminobutan und Isophorondiamin;
Diethylentriamin, N-Methyldiethylentriamin, N-Ethyldiethylentriamin, N-Propyldiethylentriamin, N-Butyldiethylentriamin, N,N-Aminoethylmethylamin, N,N-Aminoethylethylamin, N,N-Aminopropylpropylamin, N,N-Dimethyldiethylentriamin, N,N-Diethyldiethylentriamin, N-Ethyl-N-propyldiethylentriamin, N,N-Dipropyldiethylentriamin, N,N-Dibutyldiethylentriamin, N,N'-Dimethyldiethylentriamin, N-Methyl-N'-ethyldiethylentriamin, N-Ethyl-N'-methyldiethylentriamin, N-Methyl-N'-propyldiethylentriamin, N-Propyl-N'-methyldiethylentriamin, N,N'-Diethyldiethylentriamin, N,N'-Dipropyldiethylentriamin, N,N'-Dibutyldiethylentriamin, N,N''-Dimethyldiethylentriamin, N-Methyl-N''-ethyldiethylentriamin, N-Methyl-N''-propyldiethylentriamin, N,N''-Diethyldiethylentriamin, N,N''-Dipropyldiethylentriamin, N,N''-Dibutyldiethylentriamin, N,N,N'-Trimethyldiethylentriamin, N,N-Dimethyl-N'-ethyldiethylentriamin, N,N'-Dimethyl-N-ethyldiethylentriamin, N,N,N'-Triethyldiethylentriamin, N,N-Diethyl-N'-methyl-diethylentriamin, N,N-Dipropyl-N'-methyldiethylentriamin, N,N-Dibutyl-N'-methyldiethylentriamin, N,N,N''-Trimethyldiethylentriamin, N,N-Dimethyl-N''-ethyldiethylentriamin, N,N'-Dimethyl-N''-ethyldiethylentriamin, N,N,N''-Triethyldiethylentriamin, N,N-Diethyl-N''-methyldiethylentriamin, N,N-Dipropyl-N''-methyldiethylentriamin, N,N-Dibutyl-N''-methyldiethylentriamin, N-(2-Aminoethyl)-1,3-diaminopropan, Dipropylentriamin, Hexamethylentriamin, N-Methyldipropylentriamin, N,N-Dimethyldipropylentriamin, N-Ethyldipropylentriamin, N-Propyldipropylentriamin, N-Butyl-dipropylentriamin, N-Kokosfettalkyldipropylentriamin, N-Talgfettalkyldipropylentriamin, N-Oleyldipropylentriamin, N,N-Bis-(3-aminopropyl)methylamin, N,N-Bis-(3-aminopropyl)ethylamin, N,N-Bis-(3-aminopropyl)propylamin, N,N-Bis-(3-aminopropyl)laurylamin, N,N-Bis-(3-aminopropyl)kokosfettalkylamin, N,N-Bis-(3-aminopropyl)talgfettalkylamin, N,N-Dimethyldipropylentriamin, N,N-Diethyldipropylentriamin, N,N-Dilauryldipropylentriamin, N,N-Dikokosfettalkyldipropylentriamin, N,N-Ditalgfettalkyldipropylentriamin, N,N-Dioleyldipropylentriamin, N,N'-Bis-(3-aminopropyl)-1,6-diaminohexan und 1-Bis-(3-aminopropyl)-4-methylpiperazin;
N,N'-Bis-(3-aminopropyl)ethylendiamin, N,N'-Bis-(3-aminopropyl)butylendiamin, N,N'-Bis-(2-aminoethyl)piperazin, N,N'-Bis-(3-aminopropyl)piperazin, Trisaminopropylamin, Tetraethylenpentamin und Tetrapropylenpentamin;

- aliphatische Polyamine:
Polyalkylenpolyamine wie Poly-(1,3- und/oder -1,2)-propylen- und Poly-(1,4-, -1,3- und/oder -1,2)-butylenpolyamine und insbesondere Polyethylenpolyamine (Polyethylenimine) mit einem mittleren Molekulargewicht $\overline{M}_n$ von in der Regel 200 bis 3000, bevorzugt 300 bis 1000 (z.B. durch Polymerisation von Ethylenimin in Gegenwart von Alkylhalogeniden oder Säuren als Katalysator erhältlich); sind verzweigt und enthalten primäre und tertiäre und/oder sekundäre Aminogruppen (üblicherweise 1 bis 75 mol-%, bevorzugt 30 bis 50 mol-%, primäre, 0 bis 99 mol-%, bevorzugt 30 bis 50 mol-%, sekundäre und 1 bis 50 mol-%, bevorzugt 15 bis 30 mol-%, tertiäre Aminogruppen, bezogen auf die Gesamtzahl der Aminogruppen); teilweise oder nahezu vollständig alkylierte (üblicherweise $C_1$-$C_{20}$-Alkyl, bevorzugt $C_1$-$C_4$-Alkyl) und/oder acylierte (üblicherweise $C_1$-$C_{20}$-Alkanoyl) Polyalkylenpolyamine mit mindestens einer oxalkylierbaren Aminogruppe;
Polyvinylamine mit einem mittleren Molekulargewicht $\overline{M}_n$ von in der Regel 300 bis 5000 (erhältlich durch Polymerisation von N-Vinylcarbonsäureamiden und anschließende partielle oder vollständige hydrolytische Abspaltung der Acylgruppen; z.B. EP-A-71 050);

- aromatische Mono- und Diamine:
Anilin, 1- und 2-Naphthylamin, o-Phenylendiamin und 1,5- und 1,8-Diaminonaphthalin;

- Etheramine, Polyetheramine und Polyetherpolyamine:
2-Methoxyethylamin, 2-Ethoxyethylamin, 1-Methoxy-2-aminopropan, 2- und 3-Methoxypropylamin, 3-Ethoxypropylamin, Morpholin, N-(3-Aminopropyl)morpholin, 3-(2-Ethylhexoxy)propylamin, 3-Decyloxypropylamin, 3-Aminopropylethoxystearylamin, 3-(2-Methoxyethoxy)propylamin, 3-Oxapentan-1,5-diamin, 4-Oxaheptan-1,7-diamin, 4,7-Dioxadecan-1,10-diamin, 4,9-Dioxadodecan-1,12-diamin, 4,11-Dioxatetradecan-1,14-diamin und 4,7,10-Trioxadecan-1,13-diamin;
Polyethylenglykol-(3-aminopropyl)butylether, Polyethylenglykol-(3-aminopropyl)kokosfettalkylether, Polyethylenglykol(2-aminoethyl)talgfettalkylether, Polyethylenglykol(3-aminopropyl)dodecylether, Bis-(3-aminopropyl)polytetrahydrofurane und Polyoxyethylendiamine und Polyoxypropylendiamine mit einem mittleren Molekulargewicht $\overline{M}_n$ von in der Regel 150 bis 3000, bevorzugt 300 bis 1500;
Polyoxyethylenpolyamine und Polyoxypropylenpolyamine mit einem mittleren Molekulargewicht $\overline{M}_n$ von in der Regel 150 bis 3000, bevorzugt 300 bis 1500;

- Aminoalkohole, Aminoetheralkohole und Polyaminopolyetheralkohole:
Ethanolamin, Diethanolamin, Triethanolamin, 2-Methylaminoethanol, 2-Dimethylaminoethanol, 2-Ethylaminoethanol, 2-Diethylaminoethanol, 2-Diisopropylaminoethanol, 2-Butylaminoethanol, 2-Cyclohexylaminoethanol, 2-Dibutylaminoethanol, N-Butyldiethanolamin, N-Methyldiethanolamin, N-(2-Hydroxyethyl)-1,2-diaminoethan, N,N- und N,N'-Bis-(2-hydroxyethyl)-1,2-diaminoethan, N,N,N'-Tris-(2-hydroxyethyl)-1,2-diaminoethan, N,N,N',N'-Tetrakis-(2-hydroxyethyl)-1,2-diaminoethan, 2-(2-Aminoethylamino)-ethanol, N-(2-Hydroxyethyl)-1,2-diaminopropan, N,N- und N,N'-Bis-(2-hydroxyethyl)-1,2-diaminopropan, N,N,N'-Tris-(2-hydroxyethyl)-1,2-diaminopropan, N,N,N',N'-Tetrakis-(2-hydroxyethyl)-1,2-diaminopropan, N-(2-Hydroxyethyl)-1,3-diaminopropan, N,N- und N,N'-Bis-(2-hydroxyethyl)-1,3-diaminopropan, N,N,N'-Tris(2-hydroxyethyl)-1,3-diaminopropan, N,N,N',N'-Tetrakis(2-hydroxyethyl)-1,3-diaminopropan, 2-Aminopropanol, Isopropanolamin, 2-Dimethylaminopropanol, 1-Dimethylaminoisopropanol, 1-Ethylaminoisopropanol, Diisopropanolamin, Triisopropanolamin, N-Methyldiisopropanolamin, 3-Amino-2,2-dimethylpropanol, 3-(2-Hydroxyethylamino)isopropanol und 2-Aminobutanol;
2-(2-Aminoethoxy)ethanol, 2-(2-Dimethylaminoethoxy)ethanol, Aminopropylethoxystearylalkohol und Aminoethylethoxykokosfettalkohol;
durch Kondensation von Diethanolamin oder Triethanolamin erhältliche Polyetherpolyamine mit einem mittleren Molekulargewicht $\overline{M}_n$ von in der Regel 250 bis 300 (US-A-4 459 220).

In der Regel werden die oxalkylierbaren NH-Gruppierungen des Amins beim Oxalkylierungsschritt a) zu 50 bis 100 %, vorzugsweise vollständig, umgesetzt.

Als Oxalkylierungsmittel eignen sich Alkylencarbonate und vor allem Alkylenoxide, die im allgemeinen $C_2$-$C_8$-Alkylenreste, bevorzugt $C_2$-$C_3$-Alkylenreste und besonders bevorzugt Ethylenreste aufweisen, die durch Aryl-, insbesondere Phenylreste substituiert sein können, vorzugsweise jedoch nicht substituiert sind.

Beispiele für geeignete Oxalkylierungsmittel sind Ethylencarbonat, Propylencarbonat, Styroloxid, Butylenoxid, vor allem Propylenoxid und insbesondere Ethylenoxid sowie deren Gemische.

Das Zahlenverhältnis der in den gebildeten Amino(ether)alkoholen (und den erfindungsgemäßen Phosphorsäureestern) enthaltenen Alkylenoxideinheiten zu den oxalkylierbaren NH-Gruppierungen beträgt dabei üblicherweise 0,5:1 bis 200:1, bevorzugt 1:1 bis 150:1, besonders bevorzugt 2:1 bis 100:1 und ganz besonders bevorzugt 3:1 bis 50:1.

Für das Zahlenverhältnis der bei der Oxalkylierung gebildeten Ethersauerstoffatome zu den NH-Gruppierungen gelten vergleichbare Zahlenwerte. Im Extremfall kann jedoch in den Aminoalkoholen (und damit den erfindungsgemäßen Phosphorsäureestern) kein Ethersauerstoffatom enthalten sein, wenn auf jede NH-Gruppierung nur eine Alkylenoxideinheit kommt.

Das mittlere Molekulargewicht $\overline{M}_n$ der Aminoalkohole bzw. Aminoetheralkohole liegt in der Regel bei 100 bis 10 000.

Bevorzugt sind Aminoetheralkohole, die nur eine endständige Hydroxylgruppe aufweisen.

Der Oxalkylierungsschritt a) kann beim erfindungsgemäßen Verfahren wie für Umsetzungen mit Ethylenoxid üblich und z.B. in N. Schönfeldt, Grenzflächenaktive Ethylenoxid-Addukte, Wissenschaftliche Verlagsgesellschaft mbH, Stuttgart, 1. Auflage, Seite 14 bis 33 und 70-73 (1976) und Ergänzungsband, Seite 33 bis 35 (1984) beschrieben durchgeführt werden.

Bevorzugt ist die zweistufige Arbeitsweise, bei der das Amin zunächst bei in der Regel 80 bis 180°C, vorzugsweise 110 bis 160°C, in Gegenwart von Wasser als Katalysator (im allgemeinen 0,5 bis 10 Gew.-%, bevorzugt 3 bis 6 Gew.-%, bezogen auf das zu oxethylierende Amin) mit bevorzugt 0,8 bis 1,2 mol Ethylenoxid pro umzusetzende NH-Gruppierung und dann nach Entfernen des Wassers bei üblicherweise 80 bis 160°C, insbesondere 100 bis 140°C, in Gegenwart vorzugsweise von Kalium- oder auch Natriumhydroxid als Katalysator (üblicherweise 0,05 bis 5 Gew.-%, vorzugsweise 0,2 bis 1,5 Gew.-%, bezogen auf das zu oxethylierende Amin) mit der restlichen Menge Ethylenoxid bis zum gewünschten Oxethylierungsgrad umgesetzt wird. Bevorzugt wird der Katalysator in Form einer wäßrigen Lösung zugegeben, und das Wasser wird dann vorzugsweise insgesamt entfernt. Gegebenenfalls entstandenes Polyethylenglykol kann nach jedem der beiden Schritte durch Waschen mit Wasser oder einer wäßrigen Natriumchloridlösung entfernt werden.

Man kann auch einstufig arbeiten, indem man das Amin bei etwa 80 bis 160°C, bevorzugt 100 bis 140°C, in Gegenwart von Kalium- oder auch Natriumhydroxid direkt mit einem Überschuß an Ethylenoxid umsetzt. Eine kontrolliertere Reaktionsführung, die zu reineren Produkten führt, ist jedoch nur bei der zweistufigen Variante möglich.

In Schritt b) des erfindungsgemäßen Herstellungsverfahrens werden die im gebildeten Aminoalkohol oder Aminoetheralkohol enthaltenen, endständigen Hydroxylgruppen im allgemeinen zu 50 bis 100 %, vorzugsweise vollständig, verestert oder in Urethangruppen überführt. In Schritt a) nicht umgesetzte NH-Gruppierungen werden hierbei in der Regel amidiert oder in Harnstoffgruppen überführt.

Für die Veresterung eignen sich insbesondere Hydroxycarbonsäuren und auch Gemische von Dicarbonsäuren und Dialkoholen. Selbstverständlich kann man anstelle der Hydroxycarbonsäuren auch deren Ester, sowohl die Alkylester (insbesondere $C_1$-$C_8$-Alkylester, bevorzugt Methyl- und Ethylester) als auch innere Ester (Lactone) oder intermolekulare Ester (Lactide), und anstelle der Dicarbonsäuren deren Ester (insbesondere $C_1$-$C_8$-Alkylester, bevorzugt Methyl- und Ethylester) und Anhydride (vor allem auch cyclische Anhydride) einsetzen.

Die Hydroxycarbonsäuren können sowohl aliphatisch, cycloaliphatisch als auch aromatisch sein.

Als aromatische Hydroxycarbonsäuren eignen sich vor allem hydroxysubstituierte Benzoesäuren und Naphthalincarbonsäuren wie p-Hydroxyethylbenzoesäure und 2-Hydroxynaphthalin-6-carbonsäure.

Bevorzugt sind aliphatische Hydroxycarbonsäuren, insbesondere solche mit $\omega$-ständigen Hydroxylgruppen und deren Lactone. In der Regel enthalten die aliphatischen Hydroxycarbonsäuren 2 bis 22, vorzugsweise 4 bis 18, Kohlenstoffatome. Als Beispiele seien Glykolsäure, Milchsäure und deren Lactid, $\gamma$-Hydroxybuttersäure und $\gamma$-Butyrolacton, $\delta$-Hydroxyvaleriansäure und $\gamma$- und $\delta$-Valerolacton, vor allem $\varepsilon$-Hydroxycapronsäure und $\varepsilon$-Caprolacton, 12-Hydroxystearinsäure und Ricinolsäure sowie Gemische insbesondere auch natürlich vorkommender Säuren genannt.

Geeignete Dicarbonsäuren können ebenfalls aliphatisch, cycloaliphatisch oder aromatisch sein, wobei gesättigte und ungesättigte aliphatische Dicarbonsäuren, deren Anhydride und Ester bevorzugt sind und aromatische Dicarbonsäuren sich insbesondere von der Phthalsäure ableiten. In der Regel enthalten die aliphatischen Dicarbonsäuren 2 bis 22, vorzugsweise 4 bis 14 Kohlenstoffatome.

Als Beispiele für geeignete Dicarbonsäuren seien Bernsteinsäure und Bernsteinsäureanhydrid, Glutarsäure und Glutarsäureanhydrid, Adipinsäure, Azelainsäure, Sebazinsäure, Maleinsäure und Maleinsäureanhydrid, Fumarsäure, Decenylbernsteinsäureanhydrid, $C_{12/14}$- und $C_{16/18}$-Alkenylbernsteinsäureanhydride, Kolophonium/Maleinsäureanhydrid-Addukte, Hexahydrophthalsäureanhydrid, Tetrahydrophthalsäureanhydrid, 3,6-endo-Methylentetrahydrophthalsäure, Methyl-3,6-endo-methylentetrahydrophthalsäure, Phthalsäure und Phthalsäureanhydrid, Isophthalsäure und Terephthalsäure sowie deren Mischungen aufgeführt.

Als Diole eignen sich neben aromatischen und cycloaliphatischen insbesondere aliphatische Dialkohole (in der Regel 2 bis 20, bevorzugt 2 bis 8 Kohlenstoffatome) und deren Additions- und Polyadditionsprodukte, die zur Bildung zusätzliche Ethersauerstoffatome enthaltender Ester führen, sowie auch deren Mischungen, z.B. Ethylenglykol, Diethylenglykol, Triethylenglykol und Polyethylenglykole ($\overline{M}_n$ von in der Regel 190 bis 600), 1,2- und 1,3-Propylenglykol, Dipropylenglykole und Polypropylenglykole ($\overline{M}_n$ von in der Regel 190 bis 600), 1,3- und 1,4-Butandiol und Polytetramethylenglykole ($\overline{M}_n$ von in der Regel 150 bis 1000), Neopentylglykol, Hexamethylenglykol und Octamethylenglykol.

Das Molverhältnis der in Anwesenheit des Amino(ether)alkohols umgesetzten Komponenten Dicarbonsäure und Diol wird dabei vorzugsweise so gewählt, daß ein im wesentlichen hydroxyterminierter Ester mit möglichst geringer Säurezahl (in der Regel ≤ 25 mg KOH/g, bevorzugt ≤ 10 mg KOH/g, besonders bevorzugt ≤ 3 mg KOH/g) erhalten wird.

Für die Urethanbildung werden Gemische von Diisocyanaten und Diolen eingesetzt, deren Molverhältnis ebenfalls bevorzugt so eingestellt wird, daß ein im wesentlichen hydroxyterminiertes Urethan erhalten wird.

Geeignet sind sowohl aliphatische und cycloaliphatische als auch aromatische Diisocyanate. Bevorzugt sind Alkylendiisocyanate, die in der Regel 2 bis 15, insbesondere 4 bis 12, Kohlenstoffatome in der Alkylenkette enthalten.

Als Beispiele seien genannt: Tetra- und Hexamethylendiisocyanat, 1,3,5-Trimethylhexamethylendiisocyanat, Dodecamethylendiisocyanat, Isophorondiisocyanat, Methylen-bis-(4-cyclohexylisocyanat), 1,4-Cyclohexan-bis-methylenisocyanat, Toluylendiisocyanat und Diphenylmethandiisocyanat.

Geeignete Diole entsprechen den bei der Veresterung genannten Verbindungen.

Das Zahlenverhältnis der in den gebildeten Amino(ether)estern (und den erfindungsgemäßen Phosphorsäureestern) enthaltenen Carbonsäureestergruppen zu den NH-Gruppierungen des Amins beträgt üblicherweise 1:1 bis 150:1, bevorzugt 1:1 bis 60:1 und besonders bevorzugt 2:1 bis 30:1. Bei den Amino(ether)urethanen gelten gleiche Zahlenverhältnisse, jedoch sind mindestens 2 Urethangruppen pro NH-Gruppe enthalten.

Das mittlere Molekulargewicht $\overline{M}_n$ der Amino(ether)ester und -urethane liegt in der Regel bei 100 bis 25 000, insbesondere bei 250 bis 15 000 und vor allem bei 250 bis 6000.

Besonders bevorzugt sind Aminoetherester (und die erfindungsgemäßen Phosphorsäureester), bei denen die im Amin enthaltenen NH-Gruppierungen vollständig oxalkyliert und verestert sind.

Unter diesen Aminoetherestern sind wiederum diejenigen bevorzugt, die nur eine endständige Hydroxylgruppe aufweisen.

Der Veresterungsschritt b) kann beim erfindungsgemäßen Verfahren wie für Veresterungen allgemein üblich und z.B. in Houben-Weyl, Methoden der Organischen Chemie, 4. Auflage, Band XIV/2, Seite 1 bis 30 (1963) beschrieben durchgeführt werden.

So kann die Veresterung des Aminoalkohols bzw. Aminoetheralkohols mit den Hydroxycarbonsäuren in der Regel bei 80 bis 250°C, vorzugsweise bei 120 bis 200°C, vorteilhaft in Gegenwart üblicher Veresterungskatalysatoren wie organischer Metalisalze oder Säuren, z.B. Titan(IV)butylat, Zirkoniumnaphthenat, Zinkacetat und p-Toluolsulfonsäure (im allgemeinen 0,05 bis 3 Gew.-%, vor allem 0,1 bis 1 Gew.-%, bezogen auf die Gesamtmenge der Reaktanden), aber auch ohne Katalysator, unter Entfernen des Reaktionswassers in Ab- oder Anwesenheit eines inerten, vorzugsweise mit Wasser Azeotrope bildenden, organischen Lösungsmittels erfolgen.

Bei Verwendung der Säurelactone oder -lactide kann die als Additions- oder Polyadditionsreaktion ("Ringöffnungspolymerisation") ablaufende Veresterung bei Temperaturen von im allgemeinen 70 bis 200°C, insbesondere 120 bis 160°C, bevorzugt ebenfalls in Gegenwart eines Veresterungskatalysators, z.B. Zinndibutyldilaurat, Zinndioxid und Titantetrabutylat in An- oder Abwesenheit eines organischen Lösungsmittels vorgenommen werden.

Selbstverständlich kann man den Aminoalkohol bzw. Aminoetheralkohol auch direkt mit getrennt aus den genannten Carbonsäuren und gegebenenfalls Diolen, bevorzugt den Hydroxycarbonsäuren oder ihren Lactonen, hergestellten Polyestern umsetzen. Die Polyester sollten dabei endständige Hydroxylgruppen und endständige Carboxylgruppen in einem Zahlenverhältnis von in der Regel 1,1 bis 0,8:1, vorzugsweise 1,05 bis 0,95:1, enthalten.

Sollen in Schritt b) des erfindungsgemäßen Verfahrens Urethane gebildet werden, so kann deren Herstellung ebenfalls wie allgemein üblich und z.B. in Houben-Weyl, Methoden der Organischen Chemie, 4. Auflage, Band XIV/2, Seite 57 ff. (1963) beschrieben erfolgen.

In Schritt c) des erfindungsgemäßen Herstellungsverfahrens werden in der Regel 5 bis 100 % der im gebildeten Amino(ether)ester oder -urethan enthaltenen, endständigen Hydroxylgruppen phosphatiert. Der bevorzugte Phosphatierungsgrad hängt dabei von der Anzahl der zu veresternden Hydroxylgruppen ab und beträgt bei nur einer Hydroxylgruppe insbesondere 50 bis 100 % und vor allem 97 bis 100 %, bei 2 Hydroxylgruppen insbesondere 50 bis 100 % und vor allem 97 bis 100 %, bei 3 Hydroxylgruppen insbesondere 35 bis 70 % und vor allem 45 bis 70 %, bei 4 Hydroxylgruppen insbesondere 25 bis 75 % und vor allem 35 bis 75 %, bei 5 Hydroxylgruppen insbesondere 20 bis 60 % und vor allem 30 bis 60 % und bei mehr als 5 Hydroxylgruppen insbesondere 15 bis 50 % und vor allem 20 bis 50 %.

Ganz besonders bevorzugt sind die erfindungsgemäßen Phosphorsäureester, bei denen die im Amin enthaltenen NH-Gruppierungen vollständig oxalkyliert, verestert und phosphatiert sind.

Das Zahlenverhältnis der Phosphoratome zu den NH-Gruppierungen des Amins beträgt bei den erfindungsgemäßen Phosphorsäureestern in der Regel 0,05:1 bis 3:1, bevorzugt 0,2 bis 2:1 und besonders bevorzugt 0,5:1 bis 1,5:1.

Die erfindungsgemäßen Phosphorsäureester sind vorzugsweise primäre oder sekundäre Ester. In der Regel liegen Gemische beider Formen vor, die auch tertiäre Ester enthalten können.

Die OH-Funktionen von weniger als dreifach veresterten Phosphoratomen liegen bevorzugt als freie Säurefunktionen vor, die zusammen mit den enthaltenen Aminostickstoffatomen zur Bildung innerer Salze (zwitterionische Verbindungen) führen. Sie können jedoch auch durch Umsetzung mit anorganischen Basen wie Alkalimetallhydroxiden, z.B. Natrium-, Kalium- oder Lithiumhydroxid, und auch Erdalkalimetallhydroxiden, z.B. Magnesium- oder Calciumhydroxid, und Ammoniak oder organischen Basen wie Mono-, Di- oder Tri-$(C_1\text{-}C_6\text{-alkyl})$aminen, z.B. Trimethylamin, Triethylamin, Diethylamin, Dipropylamin, Dibutylamin oder Mono-, Di- oder Tri-$(C_1\text{-}C_4\text{-alkanol})$aminen, z.B. Ethanolamin, Diethanolamin, Triethanolamin, neutralisiert werden und in Form der entsprechenden Salze vorliegen.

Für die Phosphatierung c) geeignete esterbildende Phosphorverbindungen sind z.B. Phosphoroxychlorid, Orthophosphorsäure und bevorzugt Phosphorpentoxid und Polyphosphorsäuren, insbesondere lineare Polyphosphorsäuren der Formel $H_{n+2}P_nO_{3n+1}$, in der n vorzugsweise 2 bis 10 bedeutet (niedermolekulare Polyphosphorsäuren, wobei n=5 besonders bevorzugt ist und einer Polyphosphorsäure mit einem Gehalt von 85 % $P_4O_{10}$ entspricht), die beide vor allem zur Bildung von Gemischen primärer und sekundärer Phosphorsäureester führen.

Die Umsetzung der in Schritt b) gebildeten Amino(ether)ester oder -urethane mit diesen Phosphatisierungsagentien kann nach an sich bekannten Methoden und wie z.B. in Houben-Weyl, Methoden der Organischen Chemie, 4. Auflage, Band XII/2, Seite 143-210 (1963) beschrieben vorgenommen werden.

Abhängig von der Phosphorverbindung empfehlen sich dabei verschiedene Reaktionstemperaturen: bei Verwendung von Phosphoroxychlorid z.B. 20 bis 130°C, bei Orthophosphorsäure 80 bis 180°C, bei Polyphosphorsäure und Phosphorpentoxid 50 bis 130°C, vorzugsweise 70 bis 110°C.

Bei der Phosphatierung wird in der Regel kein Lösungsmittel benötigt, sondern die Phosphorverbindung wird vorteilhaft direkt in eine Schmelze des Amino(ether)esters oder -urethans eingetragen.

Die Einsatzmenge an der Phosphorverbindung hängt vom gewünschten Phosphatierungsgrad ab. Die maximale Menge wird durch die mittlere Anzahl der im Amino(ether)ester oder -urethan enthaltenen Hydroxylgruppen, die über die Hydroxylzahl des Esters bzw. Urethans bestimmt werden kann, vorgegeben.

Bei Verwendung der bevorzugten Agentien Polyphosphorsäure und Phosphorpentoxid, insbesondere auch im Überschuß, kann es zur Bildung von Di- und Polyphosphorsäureestern kommen, die sich jedoch in Gegenwart von Wasser leicht zu den erfindungsgemäßen Orthophosphorsäureestern hydrolysieren lassen.

Selbstverständlich kann man die erfindungsgemäßen Phosphorsäureester auch auf anderem Weg erhalten, indem man zunächst einen Polyester aus der Hydroxycarbonsäure bzw. deren Estern herstellt, diesen phosphatiert und den gebildeten Phosphorsäureester schließlich mit dem oxalkylierten Amin umsetzt.

Die erfindungsgemäßen Phosphorsäureester eignen sich vorteilhaft als Dispergiermittel für Feststoffe aller Art. Besonders geeignet sind sie beispielsweise für die Dispergierung von Füllstoffen wie Baryt, Kalk, Kaolin und Talk, z.B. in Kunststoffen, und ganz besonders geeignet sind sie für die Dispergierung von organischen und anorganischen Pigmenten sowohl in Kunststoffen als auch besonders in Lacken, Druck- und Anstrichfarben. Dabei sind sie für die Dispergierung von polaren organischen Pigmenten und vor allem von anorganischen Pigmenten, insbesondere Eisenoxidpigmenten, von besonderem Interesse.

Als Beispiele für zu dispergierende Pigmente seien genannt:

- Monoazopigmente:             C.I. Pigment Brown 25;
                               C.I. Pigment Orange 5, 36 und 67;
                               C.I. Pigment Red 1, 2, 3, 48:4, 49, 52:2, 53, 57:1, 251, 112, 170 und 184;
                               C.I. Pigment Yellow 1, 3, 73, 74, 65, 97, 151 und 183;

- Disazopigmente:              C.I. Pigment Orange 34;
                               C.I. Pigment Red 144 und 166;
                               C.I. Pigment Yellow 12, 13, 17, 83, 113 und 126;

- Anthrachinonpigmente:        C.I. Pigment Yellow 147 und 177;
                               C.I. Pigment Violet 31;

| | |
|---|---|
| - Anthrapyrimidinpigmente: | C.I Pigment Yellow 108; |
| - Chinacridonpigmente: | C.I. Pigment Red 122, 202 und 20;<br>C.I. Pigment Violet 19; |
| - Chinophthalonpigmente: | C.I. Pigment Yellow 138; |
| - Dioxazinpigmente: | C.I. Pigment Violet 23 und 27; |
| - Flavanthronpigmente: | C.I. Pigment Yellow 24; |
| - Indanthronpigmente: | C.I. Pigment Blue 60 und 64; |
| - Isoindolinpigmente: | C.I. Pigment Orange 69;<br>C.I. Pigment Red 260;<br>C.I. Pigment Yellow 139; |
| - Isoindolinonpigmente: | C.I. Pigment Orange 61;<br>C.I. Pigment Red 257 und 260;<br>C.I. Pigment Yellow 109, 110, 173 und 185; |
| - Metallkomplexpigmente: | C.I. Pigment Yellow 117 und 153; |
| - Perinonpigmente: | C.I. Pigment Orange 43;<br>C.I. Pigment Red 194; |
| - Perylenpigmente: | C.I. Pigment Black 31 und 32;<br>C.I. Pigment Red 123, 149, 178, 179, 190 und 224;<br>C.I. Pigment Violet 29; |
| - Phthalocyaninpigmente: | C.I. Pigment Blue 15, 15:1, 15:2, 15:3, 15:4, 15:6 und 16;<br>C.I. Pigment Green 7 und 36; |
| - Pyranthronpigmente: | C.I. Pigment Orange 51;<br>C.I. Pigment Red 216; |
| - Thioindigopigmente: | C.I. Pigment Red 88; |
| - Triphenylmethanpigmente: | C.I. Pigment Blue 1, 61 und 62;<br>C.I. Pigment Green 1;<br>C.I. Pigment Red 81 und 169;<br>C.I. Pigment Violet 2 und 3; |

- C.I. Pigment Black 1 (Anilinschwarz);

- C.I. Pigment Yellow 101 (Aldazingelb);

Anorganische Pigmente:

| | |
|---|---|
| - Weißpigmente: | Titandioxid (C.I. Pigment White 6), Zinkweiß, Farbenzinkoxid; Zinksulfid, Lithopone; Bleiweiß; |
| - Schwarzpigmente: | Eisenoxidschwarz (C.I. Pigment Black 11), Eisen-Mangan-Schwarz, Spinellschwarz (C.I. Pigment Black 27); Ruß (C.I. Pigment Black 7); |
| - Buntpigmente: | Chromoxid, Chromoxidhydratgrün; Chromgrün (C.I. Pigment Green 48); Cobaltgrün (C.I. Pigment Green 50); Ultramaringrün;<br>Kobaltblau (C.I. Pigment Blue 28 und 36); Ultramarinblau; Eisenblau (C.I. Pigment Blue 27); Manganblau;<br>Ultramarinviolett; Kobalt- und Manganviolett; |

Eisenoxidrot (C.I. Pigment Red 101); Cadmiumsulfoselenid (C.I. Pigment Red 108); Molybdatrot (C.I. Pigment Red 104); Ultramarinrot;
Eisenoxidbraun, Mischbraun, Spinell- und Korundphasen (C.I. Pigment Brown 24, 29 und 31), Chromorange;
Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);

- Glanzpigmente: Metalleffektpigmente auf der Basis metalloxidbeschichteter Metallplättchen; Perlglanzpigmente auf der Basis metalloxidbeschichteter Glimmerplättchen.

Die Herstellung von Feststoffdispersionen, insbesondere Pigmentdispersionen vor allem für Lacke und Druck- sowie Anstrichfarben unter Verwendung der erfindungsgemäßen Phosphorsäureester oder ihrer Mischungen als Dispergiermittel kann auf unterschiedliche Weise nach an sich bekannten Methoden erfolgen. Wesentlich ist dabei, daß eine möglichst gleichmäßige Durchmischung von Pigment und Dispergiermittel, vorzugsweise eine Belegung der Oberfläche der Pigmentteilchen mit dem Dispergiermittel erreicht wird.

So können die erfindungsgemäßen Phosphorsäureester, die in Abhängigkeit von ihrer Zusammensetzung in flüssiger oder fester Form, als Öl, Wachs oder Paste anfallen, zunächst in einem beliebigen, für die jeweilige Anwendung geeigneten Dispergiermedium gelöst, emulgiert oder suspendiert werden. Prinzipiell geeignete Dispergiermedien sind dabei Wasser, mit Wasser homogen mischbare oder weitgehend wasserlösliche organische Lösungsmittel. Das zu dispergierende Pigment kann dann als Feststoff, in Form eines wäßrigen Filterkuchens oder als Aufschlämmung in einem ebenfalls beliebigen Dispergiermedium hinzugegeben werden. Die erhaltene Dispersion wird anschließend gut durchmischt, z.B. gerührt, geschüttelt (gewünschtenfalls unter Zusatz von Dispergierhilfsmitteln wie Glas- oder Keramikperlen) oder einer Behandlung mit Dispergieraggregaten wie Kugelmühlen unterzogen.

Selbstverständlich kann man auch umgekehrt vorgehen und die Phosphorsäureester (als solche oder in gelöster, emulgierter oder dispergierter Form) in eine Aufschlämmung oder Dispersion des Pigments geben und gegebenenfalls nachdispergieren.

Den erhaltenen, Phosphorsäureester, Pigment und Dispergiermedium enthaltenden Dispersionen können dann zur Herstellung von Wasserbasislacken, konventionellen Lacken, High Solids Lacken oder Druckfarben übliche weitere Komponenten wie Bindemittel (natürliche oder künstliche Harze, z.B. Alkyd- oder Acrylatharze, sowie gegebenenfalls Vernetzer und Vernetzungskatalysatoren), Verlaufmittel, Verdicker und/oder Sikkative in einem oder mehreren Schritten zugesetzt werden, oder umgekehrt kann die Dispersion auch zunächst einer oder mehreren der genannten Komponenten zugesetzt werden.

Man kann das Dispergiermedium auch durch Destillation oder Filtration weitgehend oder vollständig aus den Dispersionen entfernen und den dispergierbaren, da mit Dispergiermittel belegten "Pigmentrückstand" für den gewünschten Zweck einsetzen.

Weitere Möglichkeiten zur Herstellung leicht dispergierbarer, für die weitere Verarbeitung geeigneter, flüssiger oder vorzugsweise fester Pigmentpräparationen bestehen z.B. darin, den Phosphorsäureester in einem späteren Stadium der Pigmentsynthese zuzugeben oder isoliertes Pigment und Phosphorsäureester trocken, vorzugsweise mit Hilfe von Dispergieraggregaten, zu mischen oder zu mahlen.

Schließlich können Pigment und Phosphorsäureester auch ohne vorheriges Mischen direkt bei der Herstellung von Lacken und Druck- oder Anstrichfarben eingesetzt werden.

Weiterhin bietet es sich insbesondere bei der Herstellung von Konzentratpasten für Druckfarben an, dem wäßrigen Pigmentfilterkuchen während des Flush-Prozesses den Phosphorsäureester zuzusetzen, wobei das Pigment eine lipophile Benetzung erhält und sich eine weitgehend pigmentfreie wäßrige Phase abscheidet.

Mit Hilfe der erfindungsgemäßen Phosphorsäureester können Lacke und Druck- oder Anstrichfarben mit hervorragenden Anwendungseigenschaften (hoher Flockungsstabilität, sehr gutem Fließverhalten, guter Koloristik, gutem Glanz, hoher Lasur) hergestellt werden. In der Regel werden dabei, bezogen auf das zu dispergierende Pigment, 0,1 bis 30 Gew.-%, vorzugsweise 1 bis 15 Gew.-%, Phosphorsäureester verwendet.

Beispiele

A) Herstellung von erfindungsgemäßen Phosphorsäureestern

Beispiel 1 bis 11

a) Herstellung des Amino(ether)alkohols ("AEA")
Die Herstellung erfolgte auf allgemein bekannte Weise durch zweistufige Umsetzung von Amin und EO, wobei in der ersten Stufe mit 5 Gew.-% Wasser, bezogen auf das Amin, als Katalysator bei Temperaturen von 130 bis 150°C und in der zweiten Stufe mit 1 bis 2 Gew.-%, bezogen auf das Amin, Kalium-tert.-butanolat (Beispiel 10: Kaliumhydroxid) als Katalysator bei 120 bis 130°C gearbeitet wurde.

b) Herstellung des Amino(ether)esters ("AEE")

Eine Mischung von $x_b$ g des in Schritt a) erhaltenen Amino(ether)alkohols ("AEA") $y_b$ g $\varepsilon$-Caprolacton ("$\varepsilon$") und $z_b$ g Zinndibutyldilaurat ("ZBL") wurde unter Inertgas auf $T_b$°C erhitzt, $t_b$ h bei dieser Temperatur gerührt und dann auf Raumtemperatur abgekühlt.

c) Herstellung des Amino(ether)esterphosphats ("AEEP")

Unter Inertgas und Feuchtigkeitsausschluß wurden $x_c$ g des in Schritt b) erhaltenen Amino(ether)esters ("AEE") unter Rühren auf $T_c$°C erhitzt. Nach Zugabe von $y_c$ g Phosphatierungsagens P (Polyphosphorsäure (85 % $P_4O_{10}$)-"PPS" oder Phosphorpentoxid ($P_4O_{10}$)) wurde die Mischung noch $t_c$ h bei dieser Temperatur gerührt und dann auf Raumtemperatur abgekühlt.

Einzelheiten zu diesen Versuchen sowie deren Ergebnisse sind in den Tabellen 1a bis 1c zusammengestellt. Die dort angegebenen mittleren Molekulargewichte $\overline{M}_n$ wurden über die Aminzahl bestimmt. Die ebenfalls aufgeführten Viskositäten $\eta$ [mPas] wurden mit einem Rotationsviskosimeter Haake VT 500 gemessen.

Tabelle 1a

| Bsp. | $x_a$ g | Amin A | $y_a$ g | EO | $\overline{M}_n$ |
|---|---|---|---|---|---|
| | | | 1. Stufe | 2.Stufe | |
| 1 | 240 | Di-(2-ethylhexyl)amin | 50 | 320 | 540 |
| 2 | 180 | Dicyclohexylamin | 50 | - | |
| 3 | 180 | Dicyclohexylamin | 50 | 580 | 830 |
| 4 | 370 | Di-(2-ethylhexyl)amin | 75 | 900 | 860 |
| 5 | 370 | Di-(2-ethylhexyl)amin | 75 | 900 | 860 |
| 6 | 350 | N,N-Dibutylethanolamin* | - | 810 | 560 |
| 7 | 240 | Di-(2-ethylhexyl)amin | 50 | 530 | 810 |
| 8 | 240 | Di-(2-ethylhexyl)amin | 50 | 320 | 540 |
| 9 | 600 | N-Kokosfett-1,3-diaminopropan | 320 | - | 370 |
| 10 | 100 | Polyethylenimin ($\overline{M}_n$ = 750) | 110 | 320 | 3500 |
| 11 | - | Triethanolamin* | - | - | |

\* es wurde direkt das "EO-Addukt" Alkoholamin eingesetzt

Tabelle 1b

| Bsp. | $x_b$ g AEA | $y_b$ g ε | $z_b$ g ZBL | $T_b$ [°C] | $t_b$ h | Ergebnis | | | |
|------|------|------|------|------|------|------|------|------|------|
| | | | | | | Ausbeute [g] | Aussehen | $\overline{M}_n$ | η [mPas] |
| 1 | 150 | 87 | 0,2 | 135 | 5 | 133 | beigefarbenes Öl | 840 | 70[a] |
| 2 | 80 | 122 | - | 135 | 5 | 200 | braune, klare Flüssigkeit | 580 | 20[a] |
| 3 | 80 | 69 | - | 135 | 5 | 143 | helles Wachs | 1490 | 340[a] |
| 4 | 120 | 96 | 0,2 | 135 | 5 | 211 | helles Wachs | 1540 | 180[a] |
| 5 | 110 | 103 | 0,2 | 135 | 5 | 209 | helles Wachs | 1610 | 265[a] |
| 6 | 228 | 320 | 0,5 | 135 | 5 | 532 | beigefarbene Paste | 1370 | 180[a] |
| 7 | 167 | 114 | - | 160 | 10 | 270 | orangebraunes Öl | 1490 | 135[a] |
| 8 | 89 | 86 | - | 160 | 10 | 165 | braune Paste | 1090 | 125[a] |
| 9 | 97 | 143 | 0,2 | 130 | 4 | 233 | braune Flüssigkeit | 1100 | 150[a] |
| 10 | 73 | 228 | 0,3 | 130 | 5 | 301 | hellbraunes Wachs | 16000 | 1540[b] |
| 11 | 15 | 114 | 0,1 | 130 | 5 | 125 | helle, feste Masse | 1250 | 430[a] |

[a] Messung mit Sensor NV bei 50°C mit einer Schergeschwindigkeit D = 100 s$^{-1}$
[b] Messung mit Sensor NV bei 50°C mit einer Schergeschwindigkeit D = 40 s$^{-1}$

Tabelle 1c

| Bsp. | $x_c$ g AEE | $y_c$ g | P | $T_c$ [°C] | $T_c$ h | Ergebnis | | |
|------|------|------|------|------|------|------|------|------|
| | | | | | | Ausbeute [g] | Aussehen | η [mPas] |
| 1 | 81 | 6,3 | $P_4O_{10}$ | 80 | 6 | 86 | beigefarbenes, hoch-viskoses Öl | 3820[c] |
| 2 | 40 | 7,7 | PPS | 80 | 6 | 47 | braunes Wachs | - |
| 3 | 59 | 4,4 | PPS | 80 | 6 | 63 | gelbliche Paste | 3200[c] |
| 4 | 50 | 3,4 | PPS | 80 | 6 | 53 | beigefarbene Paste | 4180[c] |
| 5 | 50 | 3,2 | PPS | 80 | 6 | 53 | beigefarbene Paste | 3260[c] |
| 6 | 110 | 13,2 | PPS | 80 | 7 | 163 | braune Paste | 2450[c] |
| 7 | 141 | 4,8 | $P_4O_{10}$ | 80 | 6 | 144 | beigefarbene Paste | 1380[c] |
| 8 | 116 | 4,8 | $P_4O_{10}$ | 80 | 6 | 120 | braune Paste | 540[c] |
| 9 | 48 | 5,2 | PPS | 80 | 5 | 53 | braunes Wachs | 35000[d] |
| 10 | 90 | 5,2 | PPS | 75 / 110 | 4 / 3 | 95 | braunes Wachs | 88000[d] |
| 11 | 65 | 5,2 | PPS | 80 | 5 | 69 | braunes Wachs | 11000[d] |

[c] Messung mit Sensor PK 1,1° bei 60°C mit einer Schergeschwindigkeit D = 400 s$^{-1}$
[d] Messung mit Sensor PK 1,1° bei 60°C mit einer Schergeschwindigkeit D = 40 s$^{-1}$

B) Anwendung von erfindungsgemäßen Phosphorsäureestern

B1) Herstellung von Tönpasten

Eine Mischung von jeweils 1,5 g des in A) erhaltenen Dispergiermitteis, 13,5 g C.I. Pigment Red 101 (mittlere Teilchengröße < 0,1 μm) und 20,0 g Wasser wurde 10 min im Dissolver angeteigt. Nach Zugabe von 61,7 g einer wäßrigen anionischen Polyurethan-Dispersion, Einstellen eines pH-Wertes von 7,8 durch Zugabe einer 10 %igen wäßrigen Lösung von Dimethylethanolamin und Auffüllen mit Wasser auf 100 g wurde die Mischung mit 240 g SAZ-Perlen (Durchmesser ca. 1,5 mm) 120 min auf dem Skandex angerieben.

B2) Prüfung

Farbstärke:

Die Bestimmung der Farbstärke (Angabe als Färbeäquivalente FAE) erfolgte nach DIN 53 234 über die Weißaufhellung der jeweiligen Tönpaste mit einem Weißlack. Dazu wurden 2,0 g Tönpaste und 4,0 g eines 38,8 gew.-%ig pigmentierten $TiO_2$-Weißlackes gemischt.

Der analogen Präparation mit dem unbelegten Pigment wurde dabei der FAE-Wert 100 (Standard) zugeordnet. FAE-Werte < 100 bedeuten eine höhere Farbstärke als beim Standard, FAE-Werte > 100 entsprechend eine kleinere Farbstärke.

Glanz:

Die Bestimmung des Glanzes erfolgte nach DIN 67 530. Dabei wurde eine 36 μ-Abrakelung der jeweiligen Tönpaste auf Acetatfolie (10 min bei 90°C eingebrannt) mit dem Glanzmeßgerät Multigloss (Byk) bei einem Meßwinkel von 20° vermessen.

Lasur:

Die Bestimmung der Lasur erfolgte in Anlehnung an DIN 55 988. Dabei wurde eine 150 μ-Abrakelung der jeweiligen Tönpaste auf Kontrastblech (10 min bei 90°C eingebrannt) visuell nach einer Skala von ± 5 Stufen beurteilt: +5 ≙ deutlich lasierender; +4 ≙ lasierender; +3 ≙ etwas lasierender; +2 ≙ wenig lasierender; +1 ≙ Spur lasierender; 0 ≙ Standard (Tönlacke mit unbelegtem Pigment); -1 ≙ Spur deckender; -2 ≙ wenig deckender; -3 ≙ etwas deckender; -4 ≙ deckender; -5 ≙ deutlich deckender.

Fließverhalten:

Die qualitative Bestimmung des Fließverhaltens der jeweiligen Tönpaste erfolgte in Anlehnung an die DIN Becher-Messung ebenfalls in 5 Stufen (5 ≙ dünnflüssig ↔ 1 ≙ nicht fließend).

Rub-out (Flockung, Ausschwimmen):

Die Bestimmung des Rub-out erfolgt nach DIN ISO 8781. Dabei wurde als Maß für die Flockung die Rub-out-Zahl (RZ) ermittelt, die sich nach folgender Formel aus der Farbstärke $F_n$ einer normal applizierten Lackierung der oben beschriebenen weißaufgehellten Tönpaste und der Farbstärke $F_g$ einer vor dem Antrocknen geriebenen Lackierung ergibt:

$$RZ = (F_g/F_n - 1) \times 100$$

Je mehr die Rub-out-Zahl von Null (≙ keine Farbstärkeunterschiede) abweicht, um so stärker ist die im Lack eingetretene Flockung (RZ > 0 : Flockung des Buntpigments, die geriebene Fläche erscheint dunkler bzw. farbiger; RZ < 0 : Flockung des Weißpigments, die geriebene Fläche erscheint heller).

In der folgenden Tabelle sind die Ergebnisse der Prüfungen zusammengestellt.

Tabelle

| Prüfung des Dispergiermittels aus Beispiel | Farbstärke FAE-Wert | Glanz | Lasur Stufe | Fließverhalten Stufe | Rub- out RZ |
|---|---|---|---|---|---|
| 1 | 94 | 105 | +5 | 4 | +5 |
| 2 | 90 | 109 | +5 | 4 | -2 |
| 3 | 101 | 75 | +3 | 5 | +5 |
| 4 | 91 | 118 | +4 | 3 | 0 |
| 5 | 97 | 107 | +4 | 4 | +2 |
| 6 | 99 | 69 | +3 | 5 | +10 |
| 7 | 104 | 115 | +3 | 3 | 0 |
| 8 | 104 | 117 | +3 | 3 | +1 |
| 9 | 98 | 115 | +5 | 3-4 | +3 |
| 10 | 97 | 114 | +5 | 3 | +12 |
| 11 | 100 | 72 | +(3-4) | 5 | +5 |

**Patentansprüche**

1. Phosphorsäureester, erhältlich durch

    a) Umsetzung eines Mono-, Oligo- oder Polyamins mit einem Alkylenoxid oder Alkylencarbonat zu einem Aminoalkohol, Aminomono-, -oligo- oder -polyetheralkohol, wobei 50 bis 100 % der oxalkylierbaren NH-Gruppierungen des Amins oxalkyliert werden,

    b) Umsetzung des gebildeten Amino(ether)alkohols mit einer Hydroxycarbonsäure oder einer Dicarbonsäure und einem Diol zu einem Mono-, Oligo- oder Polyester oder Umsetzung mit einem Diisocyanat und einem Diol zu einem Di-, Oligo- oder Polyurethan, wobei 50 bis 100 % der im Amino (ether) alkohol enthaltenen, endständigen Hydroxylgruppen verestert oder in Urethangruppen überführt werden, und

    c) Umsetzung des gebildeten Amino(ether)esters oder -urethans mit einer phosphorsäureesterbildenden Phosphorverbindung, wobei 5 bis 100 % der im Amino(ether)ester oder -urethan enthaltenen, endständigen Hydroxylgruppen in Phosphorsäureestergruppen umgewandelt werden und die Phosphoratome ein- und/oder zweifach und gegebenenfalls dreifach verestert werden.

2. Phosphorsäureester nach Anspruch 1, die pro NH-Gruppierung des Amins 0,5 bis 200 Alkylenoxideinheiten enthalten.

3. Phosphorsäureester nach Anspruch 1 oder 2, die pro NH-Gruppierung des Amins 1 bis 150 Carbonsäureestergruppen oder 2 bis 150 Urethangruppen enthalten.

4. Phosphorsäureester nach den Ansprüchen 1 bis 3, die pro NH-Gruppierung des Amins 0,05 bis 3 Phosphoratome enthalten.

5. Phosphorsäureester nach den Ansprüchen 1 bis 4, bei denen die im Amin enthaltenen NH-Gruppierungen vollständig oxalkyliert werden.

6. Phosphorsäureester nach den Ansprüchen 1 bis 4, bei denen die im Amin enthaltenen NH-Gruppierungen vollständig oxalkyliert und verestert werden.

7. Phosphorsäureester nach den Ansprüchen 1 bis 4, bei denen die im Amin enthaltenen NH-Gruppierungen vollständig oxalkyliert, verestert und in Phosphorsäureestergruppen umgewandelt werden.

8. Phosphorsäureester nach den Ansprüchen 1 bis 7, bei denen die OH-Funktionen eines weniger als dreifach veresterten Phosphoratoms als Säure oder als Salz vorliegen.

9. Verfahren zur Herstellung von Phosphorsäureestern, dadurch gekennzeichnet, daß man es gemäß den in Anspruch 1 definierten Verfahrensschritten vornimmt.

10. Verfahren nach Anspruch 9, dadurch gekennzeichnet, daß man in Schritt b) anstelle der Hydroxycarbonsäure oder der Dicarbonsäure deren Ester einsetzt.

11. Verwendung von Phosphorsäureestern gemäß den Ansprüchen 1 bis 8 als Dispergiermittel für Feststoffe.